# FASCICULE DE BREVET EUROPEEN

(11) **EP 1 558 452 B1**
(45) Date de publication et mention de la délivrance du brevet: **05.01.2011**
(21) Numéro de dépôt: 03767893.5
(22) Date de dépôt: 04.11.2003
(51) Int. Cl.: B60G 21/055, B60G 21/05, B60G 11/62, B60G 11/20

(54) **DISPOSITIF D'ANCRAGE POUR UNE BARRE STABILISATRICE**
VERANKERUNG FÜR EINEN STABILISATORSTAB
FLEXIBLE ANTI-ROLL BAR BRACE

(30) Priorité: 08.11.2002 FR 0214009
(43) Date de publication de la demande: 03.08.2005
(73) Titulaire: Auto Chassis International, 92100 Boulogne Billancourt (FR)
(72) Inventeur: TAUPIN, Laurent, F-72000 Le Mans (FR)
(74) Mandataire: Religieux, Vincent
(86) Numéro de dépôt international: PCT/FR2003/003281
(87) Numéro de publication internationale: WO 2004/043718

(56) Documents cités:
- EP-A- 0 452 835
- FR-A- 2 618 733
- GB-A- 2 297 733
- US-A- 4 232 881

## Description

La présente invention concerne les barres anti-dévers montées sur des essieux souples, et plus particulièrement la tenue de la fixation de ces barres anti-dévers sur les bras longitudinaux formant partie de ces essieux souples.

Un tel essieu souple correspond à un profil en « H » formé d'une traverse reliant deux bras longitudinaux, une extrémité de ces bras étant liée à la roue, l'autre extrémité étant articulée sous la caisse. L'excellent compromis prestations/architecture, et une mise en oeuvre économique utilisant principalement des assemblages de type mécano soudé, ont engendré un déploiement important de la technique des essieux souples de la part des constructeurs automobiles.

Par la suite, l'élévation permanente des exigences de confort et d'agrément de conduite a orienté notamment la conception des essieux souples vers des solutions consistant à introduire une raideur de torsion entre les deux bras tirés, communément appelée « barre anti-dévers » ou « BAD », dans le but de limiter le dévers du véhicule en virage tout en préservant une grande souplesse verticale du train, garante du filtrage des imperfections de la chaussée vers la caisse.

Mais l'élargissement permanent du périmètre d'application de la technique des essieux souples vers des véhicules de forte masse (grosse berline, monospace voire véhicule utilitaire), sans pour autant transiger sur la qualité de prestation, rapproche continuellement les composants les plus sollicités de leurs limites absolues de fonctionnement. Or, la BAD fait partie des composants les plus délicats à mettre au point, notamment sur le plan de l'endurance. Outre la tenue du corps de la barre, les zones d'accostage sur les bras, généralement soudées, sont particulièrement sollicitées et requièrent toute l'attention des développeurs sous peine de rupture prématurée de la liaison.

Différentes idées ont été appliquées à divers essieux souples dans le passé afin d'améliorer la tenue en endurance de cette liaison. La plupart tourne autour du constat qu'au cours d'un chargement en dévers, outre la sollicitation attendue en torsion, la BAD est également soumise à une importante flexion tendant à la déformer « en S ». Bien que fortuite et n'ayant aucune valeur fonctionnelle contrairement à la première, cette sollicitation est suspectée d'avoir une influence prépondérante sur la tenue du cordon de soudure avec le bras.

Le document FR2795681 décrit et représente une BAD à section oblongue afin de réduire la part de la flexion en dévers. La direction d'écrasement n'est pas nécessairement la verticale, puisque les phénomènes de rotations longitudinales des bras introduisent souvent un décalage angulaire des portions du cordon les plus sujettes à flexion. En revanche, cette technique est limitée par des contraintes d'ordre process : l'écrasement de la BAD ne peut en effet excéder une valeur critique au delà de laquelle s'amorcent des fissures à l'intérieur du tube qui dégradent nettement ses prestations en endurance.

Le document US 42 32 881 représente une BAD soudée sur un bras, comprenant un renfort de type gousset pour rigidifier la liaison.

Un des objectifs de l'invention est donc de proposer un dispositif permettant d'optimiser les prestations de la barre anti-dévers tout en conservant un process de fabrication de l'essieu souple associé qui soit à la fois simple et peu coûteux.

Pour répondre à ces objectifs, l'invention propose un dispositif de renfort dans un essieu souple comprenant au moins deux bras longitudinaux reliés par une traverse et une barre anti-dévers.

Ce dispositif est caractérisé en ce qu'un renfort souple est placé entre au moins un bras longitudinal et l'extrémité de la BAD, le bras longitudinal étant soudé avec les extrémités du renfort et la BAD étant soudée avec le centre du renfort.

Selon une caractéristique de la présente invention, un espacement est prévu entre le plan contenant les soudures communes au renfort souple et au bras et le plan contenant les soudures communes au renfort souple et à la barre anti-dévers.

Selon une caractéristique de la présente invention, le renfort souple est positionné sur l'intérieur du bras longitudinal, entre ce bras et l'extrémité de la barre anti-dévers.

Selon une caractéristique de la présente invention, un évidement est réalisé au milieu du renfort souple, les dimensions de cet évidement étant inférieures à celle de la barre anti-dévers qui vient en position autour de cet évidement.

Selon une caractéristique de la présente invention, le renfort souple est positionné sur l'extérieur du bras longitudinal, entre ce bras et l'extrémité de la barre anti-dévers.

Selon une caractéristique de la présente invention, un évidement est réalisé au milieu du renfort souple, les dimensions de cet évidement étant supérieures à celle de la barre anti-dévers qui traverse cet évidement.

Selon une caractéristique de la présente invention, le renfort souple est formé d'un profil de tôle rectangulaire.

Selon une caractéristique de la présente invention, des ajours sont réalisés à l'intérieur du renfort souple à l'avant et à l'arrière de la zone de soudage de la barre anti-dévers.

Selon une caractéristique de la présente invention, le renfort souple est formé d'un profil de tôle comprenant une zone centrale et deux extrémités, situées de part et d'autre de la zone centrale, ces trois zones étant de formes arrondies et joints par des profils échancrées.

L'invention concerne également un procédé d'obtention d'un tel dispositif de renfort souple, les opérations réalisées au cours de ce procédé pouvant être, après la découpe d'une tôle pour former le renfort souple , soit le soudage du renfort sur le bras, suivi du soudage de la barre anti-dévers sur l'ensemble formé par le renfort et le bras, soit le soudage de la barre anti-dévers sur le renfort, suivi du soudage de l'ensemble formé par le renfort 5 et la barre anti-dévers 4 sur le bras 2

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un essieu souple comportant un renfort souple selon l'invention.
- la figure 2 est une représentation d'un mode de disposition du renfort selon l'invention.
- la figure 3 est une représentation d'un mode de réalisation du renfort selon l'invention.
- la figure 4 est une représentation d'un second mode de disposition du renfort selon l'invention.

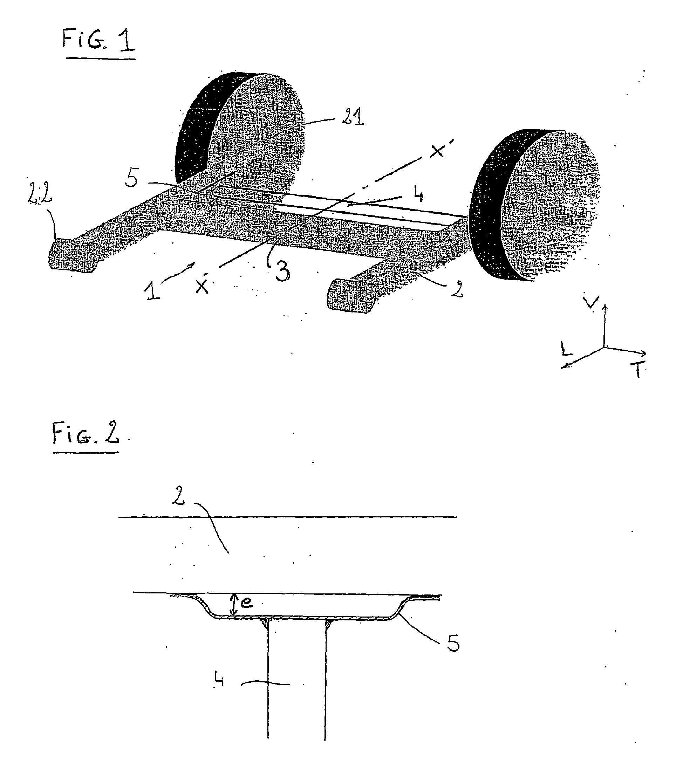

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représentée à la figure 1, un essieu souple 1 est constitué de deux bras longitudinaux 2, reliés par une traverse 3. Un tel essieu souple présentant une symétrie selon un axe longitudinal X-X', seule la partie gauche de cet essieu sera décrite et représentée figure 2.

Une extrémité du bras longitudinal 2 est reliée à un support de roue 21 et l'autre extrémité est articulée sous la caisse du véhicule par l'intermédiaire d'un palier 22. Parallèlement à la traverse 3, une barre anti-dévers 4 s'étend d'un bras longitudinal 2 à l'autre. Un renfort souple 5 est placé entre l'extrémité de la barre anti-dévers 4 et le bras longitudinal 2. Ce renfort souple 5 est d'une part soudé en son centre 51 à la barre anti-dévers 4 et d'autre part soudé à ses extrémités 52 au bras longitudinal 2. Le plan longitudinal dans lequel se situe la zone central e51 du renfort 5 est décalé transversalement vers l'intérieur du véhicule par rapport au plan longitudinal dans lequel se situent les extrémités 52 du renfort 5. Un espacement e est donc crée entre le plan de fixation de la barre anti-dévers 4 et le plan de la face de contact du bras 2.

Le type de contact entre les extrémités 52 du renfort souple 5 et le bras longitudinal 2 peut influencer le type de cordons de soudure choisis. A titre d'exemple, un accostage non plat des extrémités 52 du renfort souple 5, ou avec une quelconque incidence d'approche sur le bras 2 tendra à privilégier l'utilisation de cordons de soudure rectilignes, plutôt que l'utilisation de cordons arrondis. Dans le cas d'un accostage à plat, le choix de la trajectoire des cordons sera fonction de la tenue optimum en endurance. La forme du renfort souple 5 est de même fonction de la face du bras longitudinal 2 sur lequel la barre anti-dévers 4 doit être soudée. La figure 1 représente ainsi un mode de réalisation dans lequel le bras longitudinal 2 est un profilé de section carrée et dans lequel le renfort souple 5 associé est une plaque de tôle rectangulaire s'étendant dans l'axe du bras longitudinal, c'est à dire sensiblement dans l'axe longitudinal du véhicule. Ce type de renfort souple, qui peut venir se fixer sur une unique face du bras longitudinal, permet son utilisation pour un grand nombre de trains, et en particulier ceux dont les traverses présentent un profil « en U » très profond, venant recouvrir la barre anti-dévers.

Un tel renfort souple 5 associé à la barre anti-dévers 4 permet de combiner une bonne souplesse en torsion autour de l'axe longitudinal du véhicule, et une grande raideur en torsion dans la direction transversale. Il répond donc directement à la problématique exposée plus haut puisqu'il limite considérablement les effets néfastes de la flexion sans affecter la torsion de la barre anti-dévers, qui est elle pratiquement intégralement transmise.

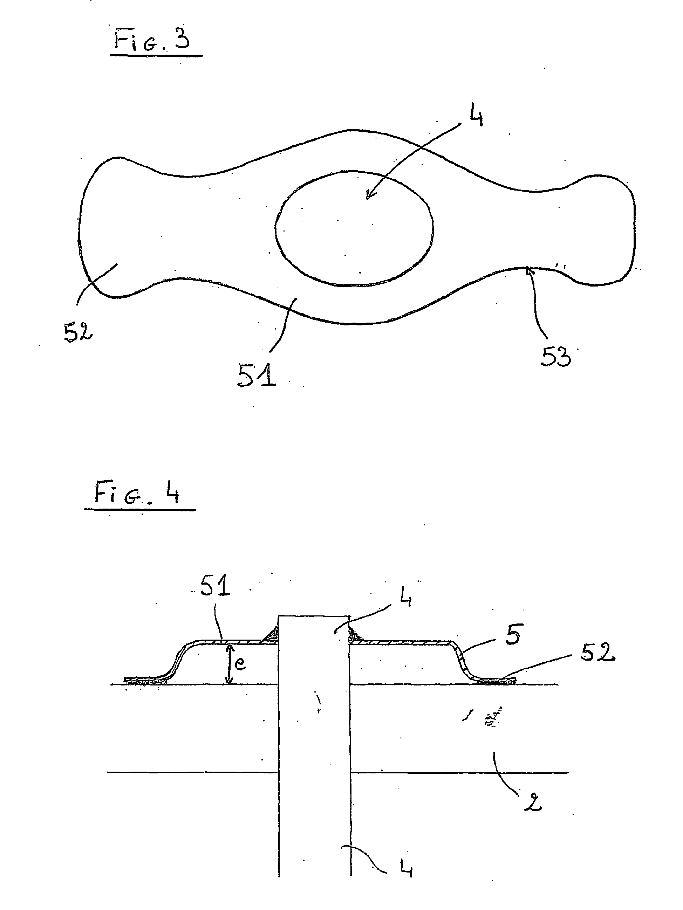

La figure 3 représente un renfort souple 5 à la géométrie particulière. Le renfort souple 5 est en effet selon l'invention un dispositif permettant de soulager le niveau de contraintes à l'accostage entre le bras longitudinal et la barre anti-dévers. Des contraintes très élevées, notamment en dévers, sont donc présentes au niveau de ce renfort souple, et plusieurs paramètres sont donc à prendre en compte afin d'optimiser la tenue à l'effort de ce renfort souple. Ces paramètres sont, entre autres, la longueur, la largeur et l'épaisseur du renfort souple, le matériau dans lequel est formé ce renfort, la forme et la trajectoire des cordons de soudure entre le renfort souple et le bras longitudinal associé, la profondeur et la position des échancrures.

L'étude de ces paramètres de contrôle a ainsi permis d'obtenir un renfort souple tel que représenté à la figure 2, présentant une zone centrale 51 et, de part et d'autre de la direction principale du renfort 5, une extrémité 52. Les deux extrémités 52, où se situent les zones de soudage du renfort souple 5 sur le bras longitudinal 2, ont une forme arrondie que vient prolonger une zone d'échancrure 53 incurvée vers l'intérieur du renfort souple 5. Ces zones d'échancrure 53 reprennent également la forme arrondie de la zone centrale 51. Cette zone centrale 51 peut être évidée en son milieu. La nécessité d'un évidement 54 au milieu de cette zone centrale 51 dépend du type d'accostage choisi dans le cahier des charges pour la barre anti-dévers 4. A titre d'exemple, les figures 2 et 4 représentent deux types d'accostage particuliers. Tel que représenté à la figure 3, lorsque la zone d'accostage de la barre anti-dévers 4 est située à l'intérieur du bras longitudinal 2, c'est à dire en regard de l'autre bras longitudinal, le renfort souple 5 est placé sur l'intérieur du bras longitudinal 2 et n'a donc pas besoin d'un évidement particulier en son centre. Un tel évidement peut toutefois être choisi pour des raisons de gain de poids, les dimensions de cette partie évidée 54 étant alors inférieures à celles de la barre anti-dévers qui est soudée au niveau de la zone centrale 51. Dans le cas d'un accostage débouchant de la barre anti-dévers 4, tel que représenté à la figure 4, la barre 4 passe à travers le bras longitudinal 2 et vient être soudée sur l'extérieur de ce bras 2, le renfort souple est placé sur la face extérieure du bras longitudinal 2, et doit présenter un évidement 54 dont les dimensions permettent le passage de la barre anti-dévers 4, qui vient être soudée alors sur le renfort souple 5.

Il est à noter également que la présence des échancrures 53 à l'avant et à l'arrière, selon l'axe longitudinal du véhicule, de la zone centrale 51 peut être avantageusement remplacée par des ajours 55 réalisés, en avant et en arrière de la zone centrale 51, à l'intérieur du renfort souple 5. La fonction de ces ajours 55, au même titre que les échancrures 53, est d'assouplir la flexion en avant et en arrière de la barre anti-dévers 4.

Il sera compris que, selon la géométrie des bras longitudinaux 2 dans la zone d'accostage de la barre anti-dévers 4, les dimensions ou les positions dans l'espace des différentes zones du renfort souple 5 pourront être modifiées et induire ainsi une modification d'autre zones de ce renfort 5. A titre d'exemple, une dissymétrie avant/arrière du renfort doit être compensée par un choix approprié des largeurs d'échancrures afin de maintenir un bon équilibre des états de contraintes au sein du renfort.

Le procédé de fabrication d'un tel essieu souple 1 intégrant un renfort de barre anti-dévers est ainsi simplifiée car il ne nécessite initialement qu'une opération de découpe de tôle, plus ou moins travaillée selon le profil du renfort 5. Selon un mode particulier de réalisation, le renfort souple 5 ainsi découpé est dans un premier temps soudé par ses extrémités sur le bras longitudinal 2, en vue d'un assemblage ultérieur par soudage en son centre à la barre anti-dévers 4. Selon un autre mode de réalisation, le renfort souple 5, après l'opération de découpe, est dans un premier temps soudé en son centre à la barre anti-dévers 4 puis assemblé au bras longitudinal 2. Il est à noter que la possibilité d'obtenir l'essieu souple de l'invention selon plusieurs procédés est intéressante pour les constructeurs automobiles qui peuvent ainsi adapter les étapes du process de montage en fonction des différentes contraintes d'architecture du train.

## Revendications

1. Dispositif de renfort dans un essieu souple (1) comprenant au moins deux bras longitudinaux (2) reliés par une traverse (3) et une barre anti-dévers (4), **caractérisé en ce qu'**un renfort souple (5) est placé entre au moins un bras longitudinal (2) et l'extrémité de la barre anti-dévers (4), le bras longitudinal (2) étant soudé aux extrémités du renfort (5) et la barre anti-dévers (4) étant soudée au centre du renfort (5).

2. Dispositif de renfort selon la revendication 1, **caractérisé en ce qu'**un espacement (e) est prévu entre le plan contenant les soudures communes au renfort souple (5) et au bras longitudinal (2) et le plan contenant les soudures communes au renfort souple (5) et à la barre anti-dévers (4).

3. Dispositif de renfort selon la revendication 2, **caractérisé en ce que** le renfort souple (5) est positionné sur l'intérieur du bras longitudinal (2), entre ce bras (2) et l'extrémité de la barre anti-dévers (4).

4. Dispositif de renfort selon la revendication 3, **caractérisé en ce qu'**un évidement (54) est réalisé au milieu du renfort souple (5), les dimensions de cet évidement (54) étant inférieures à celle de la barre anti-dévers (4) qui vient en position autour de cet évidement (54)

5. Dispositif de renfort selon la revendication 2, **caractérisé en ce que** le renfort souple (5) est positionné sur l'extérieur du bras longitudinal (2), entre ce bras (2) et l'extrémité de la barre anti-dévers (4).

6. Dispositif de renfort selon la revendication 5, **caractérisé en ce qu'**un évidement (54') est réalisé au milieu du renfort souple (5), les dimensions de cet évidement (54') étant supérieures à celle de la barre anti-dévers (4) qui traverse cet évidement (54').

7. Dispositif selon l'une des revendications 1 à 6, **caractérisé en ce que** le renfort souple (5) est formé d'un profil de tôle rectangulaire.

8. Dispositif selon la revendication 7, **caractérisé en ce que** des ajournements (55) sont réalisés à l'intérieur du renfort souple (5) à l'avant et à l'arrière de la zone de soudage de la barre anti-dévers (4).

9. Dispositif selon l'une des revendications 1 à 6, **caractérisé en ce que** le renfort souple (5) est formé d'un profil de tôle comprenant une zone centrale (51) et deux extrémités (52), situées de part et d'autre de la zone centrale (51), ces trois zones (51, 52) étant de formes arrondies et joints par des profils échancrées (53).

10. Procédé d'obtention d'un renfort souple selon l'une des revendications 1 à 8, **caractérisé en ce que** l'on réalise les opérations suivantes :
• découpe de tôle pour former le renfort (5),
• soudage entre eux du renfort souple (5) et d'un des deux éléments que sont le bras longitudinal (2) et la barre anti-dévers (4),
• soudage sur l'ensemble formé précédemment de l'élément non utilisé précédemment.

11. Procédé d'obtention d'un renfort souple selon la revendication 10, **caractérisé en ce que** l'on réalise les opérations suivantes :
• découpe de tôle pour former le renfort (5),
• soudage de la barre anti-dévers (4) sur le renfort (5),
• soudage de l'ensemble formé par le renfort (5) et la barre anti-dévers (4) sur le bras (2).

12. Procédé d'obtention d'un renfort souple selon la revendication 10, **caractérisé en ce que** l'on réalise les opérations suivantes :
• découpe de tôle pour former le renfort (5),
• soudage du renfort (5) sur le bras longitudinal (2),
• soudage de la barre anti-dévers (4) sur l'ensemble formé par le renfort (5) et le bras (2).

## Claims

1. Reinforcing device providing reinforcement in a resilient axle (1) comprising at least two longitudinal arms (2) connected by a crossmember (3) and an antiroll bar (4), **characterized in that** a resilient reinforcement (5) is positioned between at least one longitudinal arm (2) and the end of the antiroll bar (4), the longitudinal arm (2) being welded to the ends of the reinforcement (5) and the antiroll bar (4) being welded to the middle of the reinforcement (5).

2. Reinforcing device according to Claim 1, **characterized in that** a space (e) is left between the plane containing the welds common to the resilient reinforcement (5) and to the longitudinal arm (2), and the plane containing the welds common to the resilient reinforcement (5) and to the antiroll bar (4).

3. Reinforcing device according to Claim 2, **characterized in that** the resilient reinforcement (5) is positioned on the inside of the longitudinal arm (2), between this arm (2) and the end of the antiroll bar (4).

4. Reinforcing device according to Claim 3, **characterized in that** a recess (54) is created in the middle of the resilient reinforcement (5), the dimensions of this recess (54) being smaller than that of the antiroll bar (4) that is positioned around this recess (54).

5. Reinforcing device according to Claim 2, **characterized in that** the resilient reinforcement (5) is positioned on the outside of the longitudinal arm (2) between this arm (2) and the end of the antiroll bar (4).

6. Reinforcing device according to Claim 5, **characterized in that** a recess (54') is created in the middle of the resilient reinforcement (5), the dimensions of this recess (54') being greater than that of the antiroll bar (4) which passes through this recess (54').

7. Device according to one of Claims 1 to 6, **characterized in that** the resilient reinforcement (5) is formed of a rectangular sheet metal profile.

8. Device according to Claim 7, **characterized in that** apertures (55) are made inside the resilient reinforcement (5) to the front of and to the rear of the region in which the antiroll bar (4) is welded.

9. Device according to one of Claims 1 to 6, **characterized in that** the resilient reinforcement (5) is formed of a sheet metal profile comprising a central region (51) and two ends (52) situated one on each side of the central region (51), these three regions (51, 52) being of rounded shapes and connected by indented profiles (53).

10. Method of obtaining a resilient reinforcement according to one of Claims 1 to 8, **characterized in that** the following operations are carried out:
• the sheet metal is cut to form the reinforcement (5),
• the resilient reinforcement (5) and one of the two elements that are the longitudinal arm (2) and the antiroll bar (4) are welded together,
• the element not yet used is welded to the assembly formed above.

11. Method of obtaining a resilient reinforcement according to Claim 10, **characterized in that** the following operations are carried out:
• the sheet metal is cut to form the reinforcement (5),
• the antiroll bar (4) is welded to the reinforcement (5),
• the assembly formed of the reinforcement (5) and the antiroll bar (4) is welded to the arm (2).

12. Method of obtaining a resilient reinforcement according to Claim 10, **characterized in that** the following operations are carried out:
• the sheet metal is cut to form the reinforcement (5),
• the reinforcement (5) is welded to the longitudinal arm (2),
• the antiroll bar (4) is welded to the assembly formed by the reinforcement (5) and the arm (2).

## Patentansprüche

1. Verstärkungsvorrichtung in einer biegsamen Achse (1), die mindestens zwei durch einen Querträger (3) verbundene Längsarme (2) und einen Querstabilisator (4) enthält, **dadurch gekennzeichnet, dass** eine biegsame Verstärkung (5) zwischen mindestens einem Längsarm (2) und dem Ende des Querstabilisators (4) angeordnet ist, wobei der Längsarm (2) an die Enden der Verstärkung (5) und der Querstabilisator (4) an die Mitte der Verstärkung (5) geschweißt ist.

2. Verstärkungsvorrichtung nach Anspruch 1, **dadurch gekennzeichnet, dass** ein Abstand (e) zwischen der die der biegsamen Verstärkung (5) und dem Längsarm (2) gemeinsamen Schweißverbindungen enthaltenden Ebene und der die der biegsamen Verstärkung (5) und dem Querstabilisator (4) gemeinsamen Schweißverbindungen enthaltenden Ebene vorgesehen ist.

3. Verstärkungsvorrichtung nach Anspruch 2, **dadurch gekennzeichnet, dass** die biegsame Verstärkung (5) auf der Innenseite des Längsarms (2) zwischen diesem Arm (2) und dem Ende des Querstabilisators (4) positioniert ist.

4. Verstärkungsvorrichtung nach Anspruch 3, **dadurch gekennzeichnet, dass** eine Aussparung (54) in der Mitte der biegsamen Verstärkung (5) hergestellt ist, wobei die Abmessungen dieser Aussparung (54) geringer als diejenigen des Querstabilisators (4) sind, der sich um diese Aussparung (54) herum anordnet.

5. Verstärkungsvorrichtung nach Anspruch 2, **dadurch gekennzeichnet, dass** die biegsame Verstärkung (5) auf der Außenseite des Längsarms (2) zwischen diesem Arm (2) und dem Ende des Querstabilisators (4) positioniert ist.

6. Verstärkungsvorrichtung nach Anspruch 5, **dadurch gekennzeichnet, dass** eine Aussparung (54') in der Mitte der biegsamen Verstärkung (5) hergestellt ist, wobei die Abmessungen dieser Aussparung (54') größer als diejenigen des Querstabilisators (4) sind, der diese Aussparung (54') durchquert.

7. Vorrichtung nach einem der Ansprüche 1 bis 6, **dadurch gekennzeichnet, dass** die biegsame Verstärkung (5) von einem rechteckigen Blechprofil gebildet wird.

8. Vorrichtung nach Anspruch 7, **dadurch gekennzeichnet, dass** Öffnungen (55) im Inneren der biegsamen Verstärkung (5) vor und hinter der Schweißzone des Querstabilisators (4) hergestellt sind.

9. Vorrichtung nach einem der Ansprüche 1 bis 6, **dadurch gekennzeichnet, dass** die biegsame Verstärkung (5) von einem Blechprofil gebildet wird, das eine zentrale Zone (51) und zwei Enden (52) enthält, die sich zu beiden Seiten der zentralen Zone (51) befinden, wobei diese drei Zonen (51, 52) abgerundete Formen haben und durch eingekerbte Profile (53) verbunden werden.

10. Verfahren zum Erhalt einer biegsamen Verstärkung nach einem der Ansprüche 1 bis 8, **dadurch gekennzeichnet, dass** die folgenden Vorgänge durchgeführt werden:
- Ausschneiden von Blech, um die Verstärkung (5) zu formen,
- Zusammenschweißen der biegsamen Verstärkung (5) mit einem der zwei Elemente, die der Längsarm (2) und der Querstabilisator (4) sind,
- Schweißen des vorher nicht verwendeten Elements auf die vorher geformte Einheit.

11. Verfahren zum Erhalt einer biegsamen Verstärkung nach Anspruch 10, **dadurch gekennzeichnet, dass** die folgenden Vorgänge durchgeführt werden:
- Ausschneiden von Blech, um die Verstärkung (5) zu formen,
- Schweißen des Querstabilisators (4) auf die Verstärkung (5),
- Schweißen der aus der Verstärkung (5) und dem Querstabilisator (4) geformten Einheit auf den Arm (2).

12. Verfahren zum Erhalt einer biegsamen Verstärkung nach Anspruch 10, **dadurch gekennzeichnet, dass** die folgenden Vorgänge durchgeführt werden:
- Ausschneiden von Blech, um die Verstärkung (5) zu formen,
- Schweißen der Verstärkung (5) auf den Längsarm (2),
- Schweißen des Querstabilisators (4) auf die von der Verstärkung (5) und dem Arm (2) geformte Einheit.
